# DEMANDE DE BREVET EUROPEEN

(11) **EP 1 936 634 A1**
(43) Date de publication de la demande: **25.06.2008**
(21) Numéro de dépôt: 07354065.0
(22) Date de dépôt: 20.12.2007
(51) Int. Cl.: G21C 7/36

(54) **Système de commande de mécanismes de contrôle de barres de réacteur nucléaire**

(30) Priorité: 21.12.2006 FR 0611183
(71) Demandeur: Data Systems & Solutions, 38240 Meylan (FR)
(72) Inventeur: Pouillot, Marc, 38360 Sassenage (FR); Royanez, Denis, 38320 Eybens (FR); Olmos, Paul, 38500 Voiron (FR); Mandier, Philippe, 38000 Grenoble (FR)
(74) Mandataire: Jouvray, Marie-Andrée

(57) **Abrégé**

Le système de commande comporte, pour chaque bobine (2) d'un mécanisme de contrôle de barres muni de trois bobines de commande alimentées à partir d'une source de courant triphasé, un module de puissance amovible indépendant. Le module de puissance (14) est connecté en série avec la bobine 2 correspondante et comporte un circuit redresseur (10) à trois thyristors, contrôlés en angle de phase par un circuit de régulation correspondant en fonction de valeurs de courant de consigne associées à la bobine. Un circuit de surveillance connecté à une interface de visualisation permet de visualiser le courant parcourant la bobine associée au module de puissance. En cas de défaut, le module et la bobine concernée sont facilement détectés et remplacés sans nécessiter l'arrêt de l'ensemble du réacteur.

## Description

### Domaine technique de l'invention

L'invention concerne un système de commande de mécanismes de contrôle de barres d'un réacteur nucléaire, chaque mécanisme comportant trois bobines de commande alimentées à partir d'une source de courant triphasé.

### État de la technique

Dans les réacteurs nucléaires, des barres, destinées à être insérées dans le coeur du réacteur ou à en être extraites, notamment pour en contrôler la puissance, sont réunies par grappes. Chaque grappe est connectée à une tige dont les déplacements sont contrôlés par un mécanisme de contrôle. Dans les réacteurs à eau pressurisée (PWR) actuellement utilisés aux USA ainsi que dans les réacteurs à eau pressurisée de type 900MW, 1300MW et 1450MW actuellement utilisés en France, le déplacement des tiges reliées aux grappes d'arrêt et de régulation est effectué de façon discontinue par l'intermédiaire de mécanismes de contrôle à cliquets, appelés grappins. La commande est généralement réalisée par sous-groupes de 4 grappes.

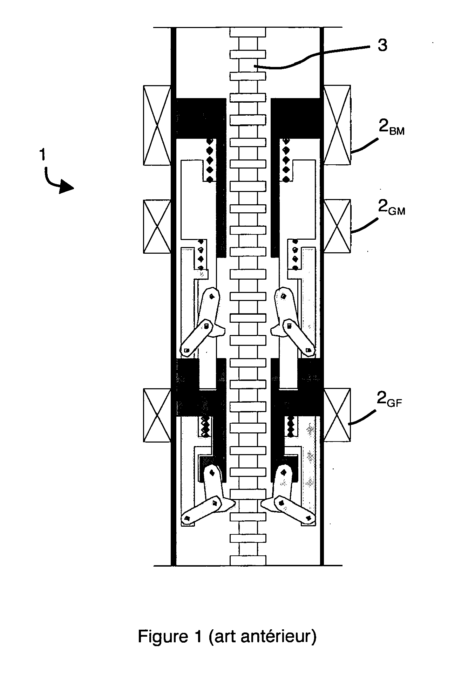

La commande de ces mécanismes est réalisée en sollicitant, dans un ordre prédéterminé, des bobines d'électroaimants qui actionnent des cliquets d'accrochage et un ensemble de montée. Comme illustré à la figure 1, en position normale du mécanisme, c'est-à-dire avec maintien de la grappe, sans mouvement, chaque mécanisme 1 comporte trois bobines de commande 2 :
- Une bobine de grappin mobile 2_{GM}, qui rend la tige 3 de la grappe solidaire d'un équipage de transfert.
- Une bobine de montée 2_{BM}, qui actionne l'équipage de transfert, ce qui déplace la tige de la grappe d'un pas mécanique si le grappin mobile (GM) est en prise.
- Une bobine de grappin fixe 2_{GF}, qui maintient la tige de la grappe en régime permanent et pendant le déplacement de l'équipage de transfert sans mouvement de grappe.

Dans la position normale du mécanisme, illustrée à la figure 1, seule la bobine de grappin fixe est excitée. Si un incident est détecté, la source d'alimentation, de type triphasé, de tous les mécanismes est coupée par des interrupteurs d'arrêt automatique du réacteur (IAAR). Toutes les bobines 2 sont alors désexcitées et les mécanismes instantanément désactivés, provoquant la chute des grappes et l'arrêt du réacteur. Pour déplacer la tige 3, toutes les bobines sont excitées selon un cycle prédéterminé pour chaque pas de déplacement.

Chaque bobine peut être commandée avec 3 niveaux de courant :
- C0 : courant nul, pour désexciter la bobine,
- C1 : courant réduit pour maintenir la bobine excitée, par exemple 4,7A pour les bobines 2_{GF} et 2_{GM} et 16A pour la bobine 2_{BM},
C2 : plein courant pour exciter la bobine, par exemple 8A pour les bobines 2_{GF} et 2_{GM} et 40A pour la bobine 2_{BM}. Ce niveau ne peut cependant pas être maintenu indéfiniment sinon la bobine serait dégradée thermiquement.

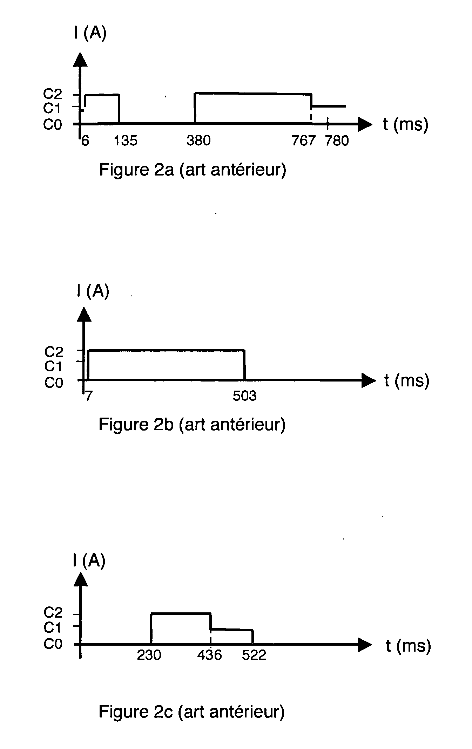

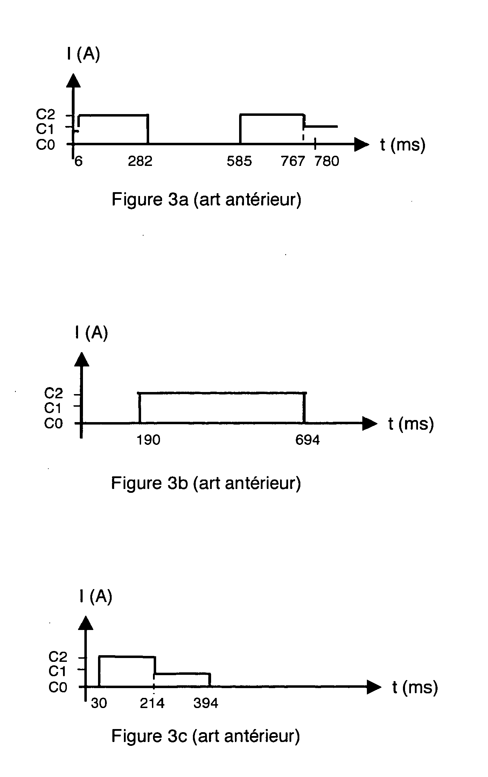

Les figures 2a à 2c illustrent un exemple de valeur du courant I, en fonction du temps t, pour un cycle de montée, respectivement pour la bobine de grappin fixe 2_{GF} (fig. 2a), pour la bobine de grappin mobile 2_{GM} (fig.2b) et pour la bobine de montée 2_{BM} (fig.2c). De manière analogue, les figures 3a à 3c illustrent un exemple de valeur du courant I, en fonction du temps t, pour un cycle de descente, respectivement dans les bobines 2_{GF} (fig.3a), 2_{GM} (fig.3b) et 2_{BM} (fig.3c).

Dans les centrales actuelles, les grappes sont réparties en groupes, chaque groupe étant constitué d'un ou deux sous-groupes, et les grappes sont normalement manoeuvrées par sous-groupe. Un sous-groupe comprend 4 grappes, disposées symétriquement autour du centre du coeur. Exceptionnellement, si le coeur comporte une grappe centrale, celle-ci constitue un sous-groupe à elle seule.

Une fonction est attribuée à chaque groupe de grappes. Ainsi, on distingue classiquement les grappes d'arrêt, manoeuvrées uniquement en mode manuel, les grappes de régulation de température, assurant la régulation rapide de la température moyenne du circuit primaire du réacteur, et les grappes de régulation de puissance, permettant une variation journalière de la puissance produite, ces deux derniers types de grappes étant normalement manoeuvrées en mode automatique. Le nombre de grappes et, en conséquence le nombre de mécanismes à contrôler est important, typiquement 61, dans un réacteur français de 900MW, ce qui rend le système de commande complexe.

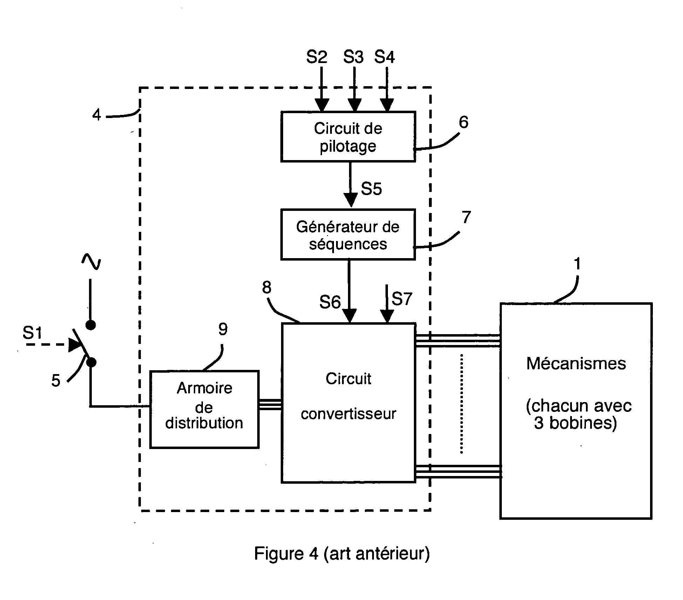

Classiquement, comme représenté à la figure 4, un circuit 4 de commande des mécanismes (classiquement appelé RGL) est alimenté par une source de tension triphasée (trois phases et neutre, avec 260Veff entre phases), par l'intermédiaire d'interrupteurs 5 d'arrêt automatique du réacteur, recevant un signal de commande de chute de grappes S1, provoquant leur ouverture lorsqu'un défaut est détecté. Le circuit de commande 4 contrôle séparément les courants appliqués aux 3 bobines des différents mécanismes de contrôle de barres, notamment en fonction de signaux de contrôle manuel S2, en provenance d'une salle de commande, de signaux de contrôle automatique S3, fournis par divers capteurs de mesure de courant et/ou de température (non représentés), et de signaux d'autorisation S4, en provenance d'un système de protection du réacteur (non représenté), qui fournit également le signal S1.

Le circuit 4 de commande des mécanismes comporte un circuit de pilotage 6, recevant notamment les signaux S2, S3 et S4, et fournissant à un générateur de séquences 7 des ordres S5 de montée et/ou de descente et/ou de maintien pour chaque sous-groupe. Le générateur de séquences 7 fournit alors des signaux S6 de commande à un circuit convertisseur 8. Celui-ci constitue, avec la source d'alimentation triphasée, les interrupteurs 5 d'arrêt automatique du réacteur et une armoire de distribution 9, disposée en amont du circuit convertisseur, le circuit de puissance de la chaîne de commande des grappes. Les signaux S6 contrôlent le circuit convertisseur 8, de manière à ce que celui-ci fournisse aux trois bobines 2 de chaque mécanisme, pendant des intervalles de temps appropriés, les courants correspondant à un cycle de montée, de descente ou de maintien conformément aux ordres S5.

Des signaux de recalage S7, permettant d'inhiber individuellement le déplacement d'une ou de plusieurs bobines de montée 2_{BM}, peuvent être fournis au circuit convertisseur 8 pour corriger d'éventuels désalignements, susceptibles de perturber le bon fonctionnement du réacteur. En effet, une interruption de mouvement sur défaut ou un dysfonctionnement ponctuel d'un mécanisme peuvent, par exemple, interrompre le mouvement d'une ou plusieurs grappes d'un sous-groupe, qui ne sont alors plus alignées en altitude.

Le circuit 4 de commande des mécanismes n'est pas, en tant que tel, classé "Important Pour la Sûreté" (nucléaire). En cas de sortie dangereuse des conditions de fonctionnement, un système de protection du réacteur contrôle l'ouverture des interrupteurs 5 d'arrêt automatique du réacteur, par l'intermédiaire du signal de commande de chute de grappes S1, ce qui coupe la puissance de commande des mécanismes. Les grappes tombent alors dans le coeur et le réacteur s'arrête.

Le circuit 4 de commande des mécanismes est, par contre, important pour la disponibilité du réacteur. En effet, un arrêt fortuit du réacteur provoque une perte de production très coûteuse et le lâcher accidentel d'une seule grappe conduit à la détection d'une variation rapide de flux potentiellement dangereuse par le système de protection, qui provoque, en conséquence, l'arrêt immédiat de l'ensemble du réacteur.

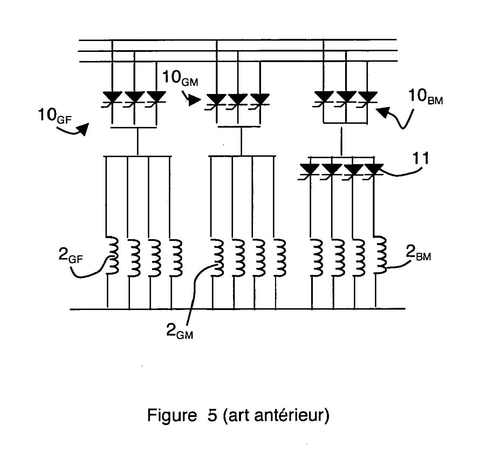

La figure 5 illustre plus en détail un système de commande de mécanismes classiquement utilisé pour la commande d'un sous-groupe de 4 grappes dans un réacteur à eau pressurisée de 1300MW ou de 1450MW actuel. Dans un tel réacteur, le circuit convertisseur 8 comporte, pour chaque sous-groupe, un convertisseur 10_{GF} pour les 4 bobines de grappins fixes, connectées en parallèle, un convertisseur 10_{GM} pour les 4 bobines de grappins mobiles, connectées en parallèle, et un convertisseur 10_{BM} pour les 4 bobines de montée, connectées en parallèle. Chaque convertisseur 10 est constitué par un redresseur à trois thyristors commandés en angle de phase, commandant en parallèle les quatre bobines de même type (2_{GF}, 2_{GM} ou 2_{BM}) des quatre grappes du même sous-groupe. Les signaux de contrôle des différents thyristors, appliqués à leurs gâchettes, sont constitués par les signaux S6 fournis par le générateur de séquences 7.

Sur la figure 5, chaque bobine de montée 2_{BM} est connectée en série avec un thyristor de recalage 11 correspondant. Ces thyristors de recalage, normalement conducteurs, sont contrôlés par les signaux de recalage S7, de manière à interrompre sélectivement le passage du courant dans une ou plusieurs bobines de montée et, en conséquence, à inhiber le déplacement des grappes correspondantes.

Dans un tel système de commande, le courant parcourant chaque bobine 2 est mesuré et un circuit de traitement (non représenté) détermine à chaque instant, pour chaque type de bobine, la plus grande (Imax) et la plus petite (Imin) des quatre valeurs mesurées. Le convertisseur 10 associé aux 4 bobines de même type régule la valeur de courant Imax, pour éviter une dégradation des bobines par un courant trop élevé. Simultanément, la valeur de courant Imin est surveillée, à l'aide de gabarits, par un circuit de contrôle (non représenté) afin de garantir que les grappes sont bien tenues et que les cycles s'effectuent correctement. En cas de défaut, ce circuit de contrôle fournit des alarmes appropriées et provoque, éventuellement, l'arrêt des mouvements et la commande simultanée des deux types de grappin.

Un système de commande de mécanismes utilisé pour la commande de 3 sous-groupes de 4 grappes (soit 12 bobines de chaque type) dans un réacteur à eau pressurisée de 900MW actuel est illustré plus en détail à la figure 6. Dans un tel système, comme dans celui décrit dans le brevet US3588518, le nombre de convertisseurs 10, constitués par des redresseurs commandés en angle de phase est minimisé, en tenant compte du fait que les 3 sous-groupes considérés ne sont jamais manoeuvrés simultanément.

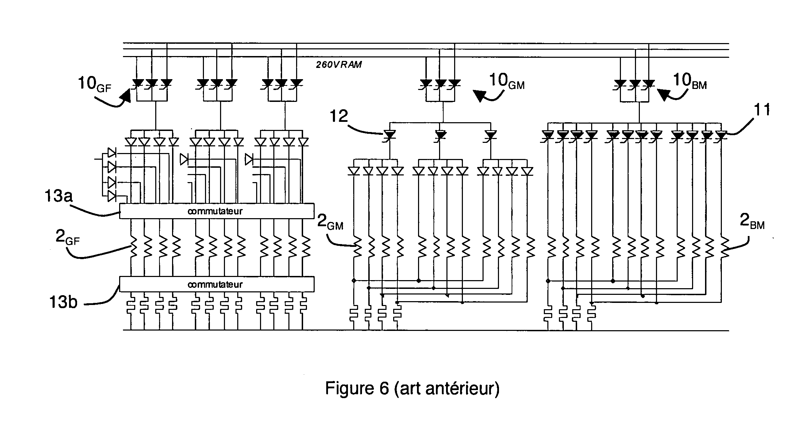

Ainsi, sur la figure 6, un seul convertisseur 10_{BM}, constitué par trois thyristors contrôlés en angle de phase par les signaux S6, est associé aux 12 bobines de montée 2_{BM} des 3 sous-groupes. Comme sur la figure 5, chaque bobine de montée 2_{BM} est connectée en série avec un thyristor de recalage 11 correspondant. De manière analogue, un seul convertisseur 10_{GM}, constitué par trois thyristors contrôlés en angle de phase, est associé aux 12 bobines de grappin mobile 2_{GM} des 3 sous-groupes. La diminution du nombre de convertisseurs associés aux bobines de grappin mobile (un pour 12 bobines contre un pour 4 bobines sur la figure 5) est rendue possible par l'insertion de trois thyristors d'aiguillage 12 entre la sortie du convertisseur 10_{GM} et les trois sous-groupes correspondants de 4 bobines de grappin mobile 2_{GM}. Les thyristors d'aiguillage 12 ne sont pas commandés en angle de phase mais de façon binaire, constituant en fait un circuit de multiplexage dont une seule sortie peut, à un instant donné, être connectée à l'entrée. Comme sur la figure 5, chaque sous-groupe de 4 bobines de grappin fixe 2_{GF} est associée à un convertisseur 10_{GF'} contrôlant les thyristors dudit convertisseur en angle de phase. Pour permettre un dépannage lorsque le réacteur est en marche, des commutateurs 13a et 13b, disposés de part et d'autre des bobines de grappin fixe 2_{GF}, sont destinés à connecter les bobines de grappin fixe directement sur une source d'alimentation externe (non représentée).

En pratique, la maintenance et le dépannage des équipements actuels sont complexes. En cas de défaillance, la variation de flux neutronique provoqué par la chute d'une grappe conduit automatiquement, dans un délai très court (1s), à un arrêt d'urgence de l'ensemble du réacteur, qui fait vieillir le réacteur. De plus, ceci conduit à des arrêts d'autant plus fréquents que le réacteur est ancien, conduisant à des pertes d'exploitation relativement élevées.

### Objet de l'invention

L'invention a pour but un système de commande des mécanismes de contrôle de barres d'un réacteur nucléaire ne présentant pas ces inconvénients. Plus particulièrement, elle a pour but un système permettant de faciliter la maintenance et d'augmenter la durée de vie d'un réacteur nucléaire.

Selon l'invention, ce but est atteint par un système selon les revendications annexées.

Le système comporte, pour chaque bobine, un module de puissance, amovible et indépendant, connecté en série avec ladite bobine et comportant un circuit redresseur et un circuit de régulation, le circuit redresseur étant connecté entre la source de courant triphasée et ladite bobine et comportant trois thyristors contrôlés en angle de phase par le circuit de régulation correspondant en fonction de valeurs de courant de consigne associées à ladite bobine.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 représente un mécanisme de commande de grappe selon l'art antérieur.
Les figures 2a à 2c illustrent un exemple connu de valeur du courant I, en fonction du temps t, pour un cycle de montée, respectivement pour la bobine de grappin fixe (fig. 2a), pour la bobine de grappin mobile (fig.2b) et pour la bobine de montée (fig.2c).
Les figures 3a à 3c illustrent un exemple connu de valeur du courant I, en fonction du temps t, pour un cycle de descente, respectivement dans les bobines de grappin fixe (fig.3a) et de grappin mobile (fig.3b) et dans la bobine de montée (fig.3c).
La figure 4 illustre schématiquement un système de commande selon l'art antérieur.
Les figures 5 et 6 représentent deux exemples de réalisation d'un système de commande de mécanismes de contrôle de barres selon l'art antérieur.
La figure 7 représente un système de commande selon l'invention.
La figure 8 représente plus en détail un module de puissance du système selon la figure 7.
Les figures 9a à 9f représentent divers gabarits utilisables dans un système de commande selon la figure 7.
La figure 10 illustre un mode particulier de réalisation d'une interface de visualisation d'un système de commande selon la figure 7.

### Description d'un mode préférentiel de l'invention

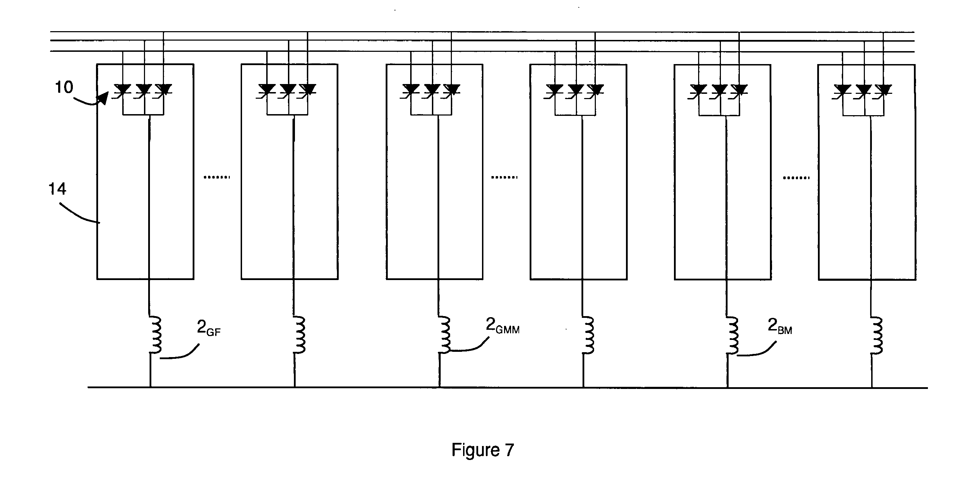

Comme représenté à la figure 7, le système de commande selon l'invention comporte, pour chaque bobine, un module de puissance 14, amovible et indépendant. Chaque module de puissance 14 est connecté en série avec la bobine 2 correspondante et comporte un convertisseur 10, comme précédemment constitué par un redresseur à trois thyristors commandés en angle de phase. Ainsi, sur la figure 7, une armoire de commande destinée à la commande d'un sous-groupe de 4 grappes comporte 12 modules de puissance 14 distincts (seuls deux sont représentés pour chaque type de bobine), respectivement associés aux 12 bobines du sous-groupe (4 bobines 2_{GF} de grappin fixe, 4 bobines 2_{GM} de grappin mobile et 4 bobines de montée 2_{BM}).

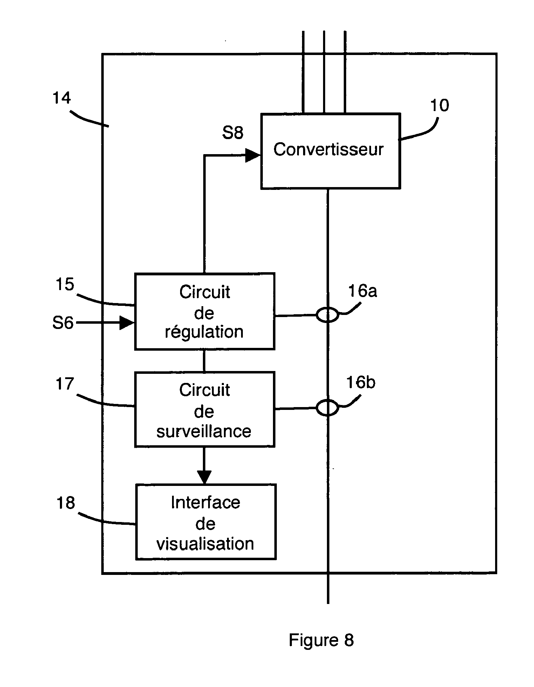

Comme illustré à la figure 8, chaque module de puissance 14 rassemble au moins un convertisseur 10 et un circuit de régulation 15 correspondant. Le circuit de régulation est connecté à un capteur de courant 16a et fournit au convertisseur 10 des signaux S8 appropriés pour le contrôle des thyristors du convertisseur en angle de phase en fonction de valeurs de courant de consigne associées à la bobine et du courant mesuré par le capteur 16a. Le module de puissance 14 comporte également un circuit de surveillance 17, connecté à un capteur de courant 16b et à une interface de visualisation 18, pour permettre la surveillance du courant parcourant la bobine 2 correspondante par un opérateur. Le circuit de surveillance comporte des moyens de comparaison, avec une temporisation prédéterminée, du courant mesuré par le capteur de courant 16b à des seuils prédéterminés, qui sont fonction de valeurs de consigne correspondantes appliquées au circuit de régulation du module.

Les circuits de régulation et de surveillance sont connectés l'un à l'autre. Ils sont préférentiellement réalisés avec des moyens de traitement séparés, pour éviter les modes communs de défaillance. Les modules de puissance 14 permettent ainsi de réguler et de surveiller le courant dans chaque bobine individuellement et indépendamment les unes des autres.

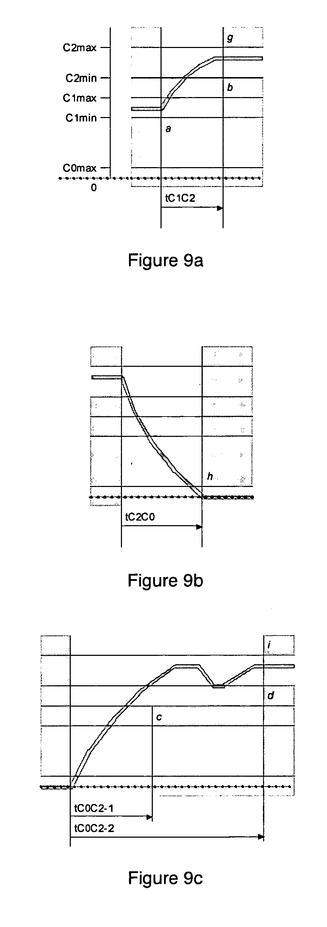

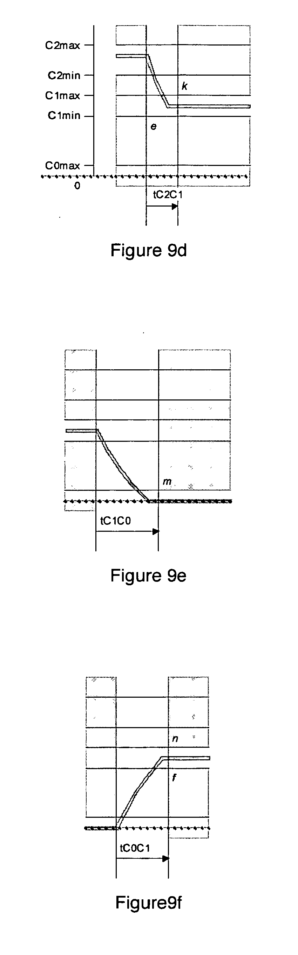

Les figures 9a à 9f représentent divers gabarits utilisés par les circuits de surveillance 17 des modules 14 pour vérifier que le courant parcourant la bobine correspondante évolue dans la tolérance et dans le temps imparti, relativement aux signaux S6 appliqués au circuit de régulation 15 du module 14. Ces divers gabarits correspondent respectivement à 6 transitions possibles entre les 3 niveaux de courant, C0 (C0=0), C1(courant de maintien) et C2, pouvant parcourir chaque bobine. Ainsi, à titre d'exemple, la figure 9a illustre un gabarit utilisé lors d'une transition de C1 à C2. Le courant mesuré, initialement comparé à des seuils C1max et C1min, est, après une temporisation prédéterminée tC1C2 associée à la transition de C1 à C2, comparé à des seuils C2min et C2max. De manière analogue, la figure 9b illustre une transition de C2 à C0 avec une comparaison initiale à des seuils C2min et C2max et, après une temporisation tC2C0, une comparaison du courant mesuré au seuil C0max. Pour une transition de C0 à C2 (figure 9c), une comparaison initiale à C0max est suivie, après une première temporisation tC0C2-1, d'une comparaison au seuil C1max et, après une seconde temporisation tC0C2-2, d'une comparaison aux seuils C2min et C2max. Pour une transition de C2 à C1 (figure 9d), une comparaison initiale à C2min et C2max est suivie, après une temporisation tC2C1, d'une comparaison aux seuils C1min et C1max. Pour une transition de C1 à C0 (figure 9e), une comparaison initiale à C1min et C1max est suivie, après une temporisation tC1C0, d'une comparaison au seuil C0max. Enfin, pour une transition de C0 à C1 (figure 9f), une comparaison initiale à C0max est suivie, après une temporisation tC0C1, d'une comparaison aux seuils C1min et C1max. Ainsi, le principe général de surveillance est identique pour tous les types de bobines.

Les modules de puissance 14 sont, de préférence, des modules standardisés, c'est-à-dire qu'un modèle unique de module est utilisé indépendamment du type de bobine. Chaque module comporte trois jeux de paramètres (consignes, valeurs des seuils et des temporisations), respectivement associés aux bobines de grappin fixe 2_{GF}, aux bobines de grappin mobile 2_{GM} et aux bobines de montée 2_{BM}. Ainsi, chaque bobine est associée à un module amovible et indépendant, permettant la régulation indépendante du courant de la bobine et incluant, de préférence, la fonction de surveillance du courant circulant dans la bobine. Le module associé à chaque bobine est donc un élément de commande complet.

Les capteurs de courant 16a et 16b sont, de préférence des capteurs magnéto-résistifs, qui présentent notamment l'avantage d'être précis à faible courant. En effet, les mêmes capteurs de courant doivent offrir la précision nécessaire pour tous les types de bobine. Or, classiquement, pour les bobines de grappin fixe 2_{GF} et mobile 2_{GM}, la valeur du courant maximum C2 est de 8A ± 0,3A, la valeur du courant de maintien C1 de 4,7A ± 0,2A et le courant nul C0 compris entre 0 et 0,1A, tandis que pour les bobines de montée 2_{BM}, C2= 40A ± 1,6A et C1=16A ± 1,6A. Ce type de capteur permet d'obtenir une précision acceptable à tous les niveaux considérés.

En raison de leur standardisation, les modules de puissance 14 sont alors surdimensionnés pour les bobines de grappins fixe et mobile, qui ont pour fonction le maintien des barres.

Dans un mode de réalisation préférentiel, chaque module 14 comporte des moyens automatiques de reconnaissance du type de la bobine associée et de sélection du jeu de paramètres (seuils et temporisations) correspondant.

Chaque module de puissance 14 est monté, de manière amovible, sur un châssis de support (non représenté), par exemple par l'intermédiaire de connecteurs complémentaires (non représentés). La reconnaissance automatique du type de bobine peut alors être réalisée par l'intermédiaire d'éléments de codage du type de bobine (représentatif du "type de châssis") prévus sur le connecteur associé au châssis de support. Chaque module de puissance peut ainsi reconnaître sa place dans l'armoire de commande, dans laquelle les emplacements correspondant aux différents types de bobine sont prédéterminés.

Dans une variante de réalisation, la reconnaissance automatique du type de bobine est réalisée par détection de signaux de codage appropriés, (représentatifs du "type de châssis") fournis au module de puissance 14 par un circuit de contrôle externe lors du montage des modules de puissance dans l'armoire de commande. Dans un mode de réalisation préféré, ces informations sont fournies au module par le générateur de séquences 7. Il est alors inutile de différencier physiquement les différents châssis ou d'effectuer une configuration manuelle du module.

Le système de commande décrit ci-dessus, avec un module de puissance 14, amovible et indépendant, pour chaque bobine 2 présente les avantages suivants par rapport aux systèmes de commande connus :
- Le courant maximum dans chaque convertisseur est réduit, en pratique divisé par 4. Les thyristors des convertisseurs peuvent donc être plus petits et disposés sur une carte de circuit imprimé comportant les circuits de régulation et de surveillance associés. L'intégration de toutes les fonctions nécessaires à une bobine dans un seul module permet alors de réduire considérablement le coût de production.
- Chaque bobine a une régulation indépendante. Ainsi, même en cas de différence thermique entre bobines, la bonne valeur du courant est envoyée à chaque bobine.
- En cas de défaut, l'opérateur est orienté sur un seul couple module-bobine. Le remplacement du module débrochable en défaut résout pratiquement tous les cas de défaut, même les défauts éventuels de l'électronique de surveillance. Si le défaut provient de la bobine, l'opérateur n'a pas à rechercher la bobine en défaut parmi quatre.
- Le nombre de type de pièces détachées est réduit car, en cas de défaut, un module est remplacé dans sa totalité par un module standardisé, ce qui permet d'optimiser le stock et facilite la maintenance.
- La fonction de recalage ne nécessite pas de thyristor supplémentaire en série avec chaque bobine. Il suffit de ne pas commander le module correspondant à une bobine de montée particulière pour que le mouvement de la grappe soit inhibé. Ceci permet de réduire les pertes thermiques de la partie puissance de 35%.

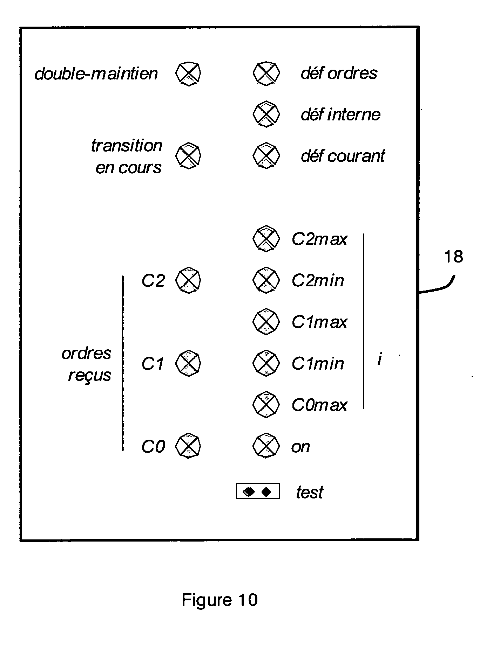

Dans un mode de réalisation préférentiel illustré à la figure 10, l'interface de visualisation 18 disposée en face avant de chaque module de puissance 14 comporte une pluralité de diodes électroluminescentes (LEDS) permettant de visualiser simultanément :
- Le niveau du courant correspondant aux ordres (signaux S6) fournis au module par le générateur de séquences 7. Pour cela, chaque interface de visualisation comporte 3 diodes électroluminescentes de consigne (les 3 LEDs inférieures de la colonne de gauche sur la figure 10), associées respectivement aux trois niveaux de courant possibles (C0, C1 ou C2, de bas en haut sur la figure 10).
- Le niveau du courant parcourant effectivement la bobine associée, mesurée par le capteur de courant 16b. Sur la figure 10, ce niveau est indiqué par deux diodes électroluminescentes de surveillance associées à chaque niveau de courant de consigne et s'allumant respectivement lorsque les valeurs minimale et maximale du courant de consigne correspondant sont atteintes. Sur la figure 10, six LEDs de surveillance sont respectivement associées à un courant nul ("ON", pour la valeur C0min), à C0max, C1min, C1max, C2min et C2max (de bas en haut, les 6 LEDs de la colonne de droite).

Les LEDs de consigne et les LEDs de surveillance sont, de préférence, disposées sous la forme de deux colonnes parallèles, avec un niveau de courant croissant, disposées en concordance. Les LEDs de surveillance constituent ainsi un bargraphe, dont toutes les LEDs sont allumées jusqu'à la valeur mesurée en régime normal établi et il est facile à un opérateur de vérifier si la valeur du courant mesuré correspond ou non à la valeur de consigne.

Une LED de signalisation d'une transition en cours (seconde LED de la colonne de gauche sur la figure 10) s'allume pendant la durée de la temporisation nécessaire au passage du courant à sa nouvelle valeur de consigne.

En cas de défaut dans la valeur du courant produit, l'ensemble de ces LEDs est figé jusqu'à l'acquittement. L'opérateur sait ainsi quel seuil a déclenché, et si le défaut s'est produit pendant une transition de courant ou non.

Trois diodes électroluminescentes de signalisation de défaut (les 3 LEDs supérieures de la colonne de droite sur la figure 10) sont destinées à signaler le type de défaut détecté : défaut dans les ordres (aucun ordre ou plusieurs ordres actifs), défaut interne ou défaut de la valeur du courant.

Une diode électroluminescente signale le déclenchement éventuel du double maintien, état de repli de l'armoire dans lequel les deux types de grappin sont activés, pour tenir les grappes en l'attente d'une maintenance.

## Revendications

1. Système de commande de mécanismes de contrôle de barres d'un réacteur nucléaire, chaque mécanisme comportant trois bobines de commande (2_{GF}, 2_{GM}, 2_{BM}) à partir d'une source de courant triphasé, système **caractérisé en ce qu'**il comporte, pour chaque bobine (2), un module de puissance (14), amovible et indépendant, connecté en série avec ladite bobine (2) et comportant un circuit redresseur (10) et un circuit de régulation (15), le circuit redresseur étant connecté entre la source de courant triphasée et ladite bobine et comportant trois thyristors contrôlés en angle de phase par le circuit de régulation (15) correspondant en fonction de valeurs de courant de consigne associées à ladite bobine.

2. Système selon la revendication 1, **caractérisé en ce que** chaque module de puissance (14) comporte au moins un capteur de courant (16a, 16b) pour mesurer le courant circulant dans la bobine (2) correspondante.

3. Système selon la revendication 2, **caractérisé en ce qu'**un (16a) des capteurs de courant est connecté au circuit de régulation (15) correspondant.

4. Système selon l'une des revendications 2 et 3, **caractérisé en ce que** chaque module de puissance (14) comporte un circuit (17) de surveillance, connecté à un (16b) des capteurs de courant.

5. Système selon l'une des revendications 3 et 4, **caractérisé en ce que** les capteurs de courant (16a, 16b) sont des capteurs magnéto-résistifs.

6. Système selon la revendication 4, **caractérisé en ce que** le circuit de surveillance (17) d'un module de puissance (14) comporte des moyens de comparaison, avec une temporisation prédéterminée, du courant fourni par le capteur de courant (16b) à des seuils prédéterminés, fonction des valeurs de consigne correspondantes appliquées au circuit (15) de régulation du module de puissance (14), lesdits seuils et lesdites temporisations constituant un jeu de paramètres associé à la bobine (2) correspondante.

7. Système selon la revendication 6, **caractérisé en ce que** les modules de puissance (14) sont standardisés et comportent chacun trois jeux de paramètres, respectivement associés à chacune des trois bobines (2_{GF}, 2_{GM}, 2_{BM}) du mécanisme correspondant, le module de puissance (14) comportant des moyens automatiques de reconnaissance du type de la bobine associée audit module de puissance et de sélection du jeu de paramètres correspondant en fonction du type de bobine.

8. Système selon la revendication 7, **caractérisé en ce que** lesdits moyens automatiques de reconnaissance comportent un connecteur du module de puissance, destiné à connecter le module de puissance à un connecteur complémentaire d'un châssis de support, ledit connecteur complémentaire comportant des éléments de codage du type de bobine.

9. Système selon la revendication 7, **caractérisé en ce que** lesdits moyens automatiques de reconnaissance comportent des moyens de détection de signaux de codage du type de bobine, transmis au circuit de surveillance à partir d'un circuit de contrôle externe au module de puissance.

10. Système selon l'une quelconque des revendications 2 à 9, **caractérisé en ce que** chaque module de puissance (14) comporte une interface de visualisation (18) comportant une pluralité de diodes électroluminescentes.

11. Système selon la revendication 10, **caractérisé en ce que** l'interface de visualisation comporte des diodes électroluminescentes de consigne, respectivement associées à différents niveaux de courant de consigne.

12. Système selon l'une des revendications 10 et 11, **caractérisé en ce que** l'interface de visualisation (18) comporte deux diodes électroluminescentes de surveillance associées à chaque niveau de courant de consigne et s'allumant respectivement lorsque les valeurs minimale et maximale du courant de consigne correspondant sont atteintes par le courant mesuré dans la bobine.

13. Système selon la revendication 12, **caractérisé en ce que** les diodes électroluminescentes de surveillance sont disposées sous forme d'une colonne, avec un niveau de courant croissant.

14. Système selon l'une quelconque des revendications 11 à 13, **caractérisé en ce que** l'interface de visualisation (18) comporte une diode de signalisation d'une transition en cours.

15. Système selon l'une quelconque des revendications 11 à 14, **caractérisé en ce que** l'interface de visualisation (18) comporte des diodes de signalisation de défaut.

16. Système selon l'une quelconque des revendications 11 à 13, **caractérisé en ce que** le circuit de surveillance (17) d'un module comporte des moyens pour figer les diodes électroluminescentes de l'interface de visualisation (18) en cas de défaut, jusqu'à réception d'un ordre d'acquittement.
